# EUROPEAN PATENT SPECIFICATION

(11) **EP 0 554 449 B1**
(45) Date of publication and mention of the grant of the patent: **02.10.1996**
(21) Application number: 91912457.8
(22) Date of filing: 11.07.1991
(51) Int. Cl.: C08L 51/04, C08L 53/02, B32B 15/04, C08L 51/00, F16F 1/36

(54) **RESIN COMPOSITION FOR COMPOSITE VIBRATION DAMPING MATERIAL AND COMPOSITE VIBRATION DAMPING MATERIAL PRODUCED THEREFROM**
HARZMISCHUNG FÜR EIN SCHWINGUNGSDÄMPFENDES VERBUNDMATERIAL UND DARAUS HERGESTELLTES SCHWINGUNGSDÄMPFENDES VERBUNDMATERIAL
COMPOSITION RESINEUSE POUR MATERIAU COMPOSITE AMORTISSEUR DE VIBRATIONS ET MATERIAU COMPOSITE AMORTISSEUR DE VIBRATIONS PRODUIT A PARTIR DE CETTE COMPOSITION

(30) Priority: 13.07.1990 JP 185992/90; 13.07.1990 JP 185993/90; 11.03.1991 JP 69444/91; 11.03.1991 JP 69445/91
(43) Date of publication of application: 11.08.1993
(73) Proprietor: NIPPON STEEL CHEMICAL CO., LTD., Tokyo (JP); NIPPON STEEL CORPORATION, Tokyo 100 (JP)
(72) Inventor: YAMAMOTO, Hiroyuki, 1-25-302, Kounandai 6-chome, Kanagawa-ken 233 (JP); ISHIKAWA, Shinya, 13-1-312 Haramachida +-chome, Tokyo 194 (JP); TANIGUCHI, Yoshihiro, 5, Kuriya 1-chome Tama-ku, Kanagawa-ken 214 (JP); ENDO, Hiroshi, Technical Development Bureau, Chiba-ken 299-12 (JP); KADOWAKI, Nobuo, Technical Development Bureau, Chiba-ken 299-12 (JP)
(74) Representative: Matthews, Derek Peter
(86) International application number: JP9100934
(87) International publication number: WO9201019

(56) References cited:
- EP-A- 0 299 499
- DE-A- 3 705 992
- JP-A-62 064 844
- JP-B- 1 057 700
- DATABASE WPI Section Ch, Week 8717, Derwent Publications Ltd., London, GB; Class A88, AN 87-120071 'vibration damp material ...' & JP-A-62 064 844 (UBE INDUSTRIES K.K.) 23 March 1987
- DATABASE WPI Section Ch, Week 8717, Derwent Publications Ltd., London, GB; Class A88, AN 87-120071 & JP-A-62 064 844

## Description

### Field of Technology

This invention relates to resin compositions for composite vibration dampers which are serviceable at temperatures from normal to as high as 100 °C and, more particularly, to resin compositions useful for the manufacture of composite vibration dampers with high vibration absorption which constitute the construction materials of vehicles, electrical parts, machinery, and structures or parts thereof and attenuate the vibration of said construction materials thereby reducing the noise level when used at temperatures from normal to as high as 100 °C and to composite vibration dampers made from said resin compositions.

### Background Technology

With the growth of transportation facilities and the spreading of residential area closer to factories in recent years, the noise- and vibration-related pollution has become a social problem and a trend has appeared at work places to regulate noise and vibration in order to improve the working environment. In response to this trend, there is a demand for development of means and further improvement of such means for vibration damping of rigid base plates of metals and others which are sources of noise and vibration.

One of such vibration-damping materials proposed to date is a three-layer composite vibration dampers consisting of two rigid base plates and an interlayer of viscoelastic resins. Materials of this type in which the rigid base plates are metals have been evaluated as vibration dampers for oil pans, engine covers, instrument panels, and floors of automobiles, hopper chutes, stoppers of conveyors, electric appliances, and metal-fabricating machinery and as construction materials of precision machines which should desirably be protected from the vibration and some are in commercial use.

In the aforesaid materials, the two metal layers may be in any configuration as long as they can be positioned facing each other and made to hold viscoelastic resins inserted between them to form a vibration damper and they may be two metal plates, two concentric metal tubes, two steel shapes, two molded forms one of which can be laid on top of another, a combination of a metal molded form and a backplate, and other materials of two-layer structure. The metals in question are not limited to any particular one and they may be iron, aluminum, zinc, lead, and alloys thereof or they may be plated with zinc, tin, chromium, and the like or coated with epoxy resins, melamine resins, and other resins.

The following resin compositions have been proposed for the viscoelastic resins constituting the interlayer of the aforesaid composite vibration dampers: compositions of polyesters or polyesters and polyolefins in Japan Kokai Tokkyo Koho No. Sho 61-89,842 (1986); compositions of amorphous polyesters and low-crystallinity polyesters in Japan Kokai Tokkyo Koho No. Sho 62-18,160 (1987); compositions of acrylonitrile-butadiene copolymers in Japan Kokai Tokkyo Koho No. Sho 60-245,550 (1985); compositions of hydroxyl group-containing liquid diene polymers in Japan Kokai Tokkyo Koho Nos. Sho 60-190,350 (1985), Sho 61-207,746 (1986), Sho 61-261,040 (1986), and Sho 62-167,042 (1987); compositions of ethylene-maleic anhydride copolymers and/or ethylene-maleic anhydride-alkyl (meth)acrylate terpolymers in Japan Kokai Tokkyo Koho Nos. Sho 62-46,638 (1987) and Sho 62-46,639 (1987); and compositions of styrene copolymers and olefin copolymers in Japan Kokai Tokkyo Koho No. Sho 62-64,844 (1987).

The aforesaid composite vibration dampers need to satisfy a number of requirements. Firstly, they must show a high level of performance in vibration damping. This property is generally expressed by the magnitude of loss factor. Secondly, the viscoelastic resins in the interlayer must show a high adhesive strength, in particular a high shear strength, to the base plates since the composite vibration dampers are used as structural materials and are also subjected to secondary fabrication such as pressing. Thirdly, the pressed composite vibration dampers may be coated and baked at 200 °C or so and the viscoelastic interlayer must not flow out at this temperature. Fourthly, the viscoelastic interlayer must have such a level of water and oil resistance as to prevent a marked loss in the adhesive strength when attacked by water or oil in actual applications.

In the cases of vibration dampers which show excellent vibration damping in the temperature range from 0 to 100°C, the resin compositions constituting the viscoelastic interlayer must undergo glass transition near normal temperature or below it and hence they have a low modulus at normal temperature. On the other hand, the shear strength is an important factor strongly affecting the press fabricability and resin compositions of high modulus are generally favorable in this respect. Thus, the viscoelastic resins in the interlayer of a composite vibration damper are required to satisfy contradictory requirements for their modulus, low for high vibration damping and high for good press fabricability. Another contradictory requirement is simultaneous satisfaction of water and oil resistance. It is extremely difficult to satisfy all of these requirements simultaneoulsy. The aforesaid conventional viscoelastic compositions are not adequate for composite vibration dampers as they are unable to satisfy the two pairs of properties, vibration damping and shear adhesive strength on the one hand and water and oil resistance on the other, to any acceptable extent.

For example, of the above-mentioned prior art technologies, those described in Japan Kokai Tokkyo Koho Nos. Sho 62-46,638 (1987) and Sho 62-46,639 (1987) yield resin compositions which perform well in vibration damping in a high temperature range, but not too well in the range from normal to high temperature and are not satisfactory for composite vibration dampers intended for use in the range from normal to high temperature. The technology described in Japan Kokai Tokkyo Koho No. Sho 59-80,454 (1984) employs unsaturated carboxylic acid-modified crystalline polyolefins and amorphous polymers as essential ingredients; the modified polyolefins, however, show very low vibration damping in the range from normal to high temperature because of their crystallinity and still do so even when combined with amorphous polymers. The technology in question thus cannot provide resin compositions satisfactory for composite vibration dampers.

The compositions of polyesters disclosed in Japan Kokai Tokkyo Koho No. Sho 62-18,160 (1987) are not sufficiently water-resistant because of their hydrophilicity while the compositions of styrene copolymers and olefin copolymers described in Japan Kokai Tokkyo Koho No. Sho 62-64, 844 (1987) are not sufficiently oil-resistant because of their lipophilicity. Hence, both of them are not satisfactory for composite vibration dampers.

The present inventors have conducted extensive studies to obtain composite vibration dampers which are free from the above-mentioned problems, found that resin compositions formulated by adding specified tackifier resins and crosslinking agents in specified proportions to resin ingredients consisting of modified block copolymers obtained by modifying block copolymers of conjugated dienes and vinyl group-containing aromatic hydrocarbons with functional group-containing vinyl compounds and, if necessary, vinyl group-containing aromatic hydrocarbon-based polymers composed of vinyl group-containing aromatic hydrocarbons and functional group-containing vinyl compounds are useful for composite vibration dampers as a viscoelastic interlayer which is well balanced in vibration damping and adhesive strength in the range from normal to high temperature, flows out with difficulty even near the baking temperature of paints, and possesses good resistance to both water and oil, and completed this invention.

It is accordingly an object of this invention to provide resin compositions suitable for the manufacture of composite vibration dampers as the former of a viscoelastic interlayer which shows excellent vibration damping not only in the range from low to normal temperature but also in the range up to a temperature as high as 100 °C, adheres strongly to metals, flows out with difficulty even near the baking temperature of paints, and possesses good resistance to water and oil.

Another object of this invention is to provide composite vibration dampers which show excellent vibration damping not only in the range from low to normal temperature but also in the range up to a temperature as high as 100°C, contain a viscoelastic inter layer difficult to flow out even near the baking temperature of paints, and possess good resistance to water and oil.

### Disclosure of the Invention

In consequence, this invention relates to resin compositions for composite vibration dampers which comprise 100 parts by weight of base resins consisting of 20% by weight or more of modified block copolymers A obtained by modifying block copolymers of conjugated dienes and vinyl group-containing aromatic hydrocarbons with functional group-containing vinyl compounds and 80% by weight or less of vinyl group-containing aromatic hydrocarbon-based polymers B composed of vinyl group-containing aromatic hydrocarbons and functional group-containing vinyl compounds, 10 to 150 parts by weight of tackifier resins with a softening point of 160°C or less, and 0.01-40 parts of crosslinking agents reactive with the functional groups of the vinyl compounds in the base resins.

This invention further relates to composite vibration dampers which are composed of two metal layers positioned facing each other at a given interval and a viscoelastic interlayer inserted between said two metal layers and formed by resin compositions which comprise 100 parts by weight of base resins consisting of 20% by weight or more of modified block copolymers A obtained by modifying block copolymers of conjugated dienes and vinyl group-containing aromatic hydrocarbons with functional group-containing vinyl compounds and 80% by weight or less of vinyl group-containing aromatic hydrocarbon-based polymers B composed of vinyl group-containing aromatic hydrocarbons and functional group-containing vinyl compounds, 10 to 150 parts by weight of tackifier resins with a softening point of 160 °C or less, and 0.01-40 parts by weight of crosslinking agents reactive with the functional groups of the vinyl compounds in the base resins.

This invention will be described in detail below.

As mentioned earlier, the composite vibration dampers of this invention are of a three-layer structure consisting of two metal layers bonded together by a viscoelastic interlayer.

In this invention, the viscoelastic interlayer is formed by resin compositions whose base resins consist of modified block copolymers A obtained by modifying block copolymers of conjugated dienes and vinyl group-containing aromatic hydrocarbons with functional group-containing vinyl compounds and vinyl group-containing aromatic hydrocarbon-based polymers B.

The modified block copolymers A are thermoplastic elastomers obtained by modifying block copolymers having at least one block of conjugated diene polymer and at least one block, preferably two or more blocks, of vinyl group-containing aromatic hydrocarbon polymer and exhibit thermoplasticity at high temperature and rubber-like properties at normal temperature.

The aforesaid modified block copolymers A preferably contain conjugated dienes and vinyl group-containing aromatic hydrocarbons at a weight ratio in the range from 95/5 to 60/40 and have a number average molecular weight in the range from 10,000 to 200,000. Their molecular structure may be linear, branched, or radial or a combination thereof.

The conjugated dienes constituting blocked copolymers A of this invention have 4 to 8 carbon atoms and include butadiene, isoprene, 2,3-dimethyl-1,3-butadiene, and 1,3-pentadiene, butadiene being preferable. The vinyl group-containing aromatic hydrocarbons include styrene, o-methylstyrene, p-methylstyrene, 1,3-dimethylstyrene, α-methylstyrene, and vinylnaphthalene, styrene being preferable.

The block copolymers useful for this invention are generally synthesized by anionic living polymerization of the monomers in an inert hydrocarbon solvent such as benzene in the presence of an organolithium compound as catalyst. The modification of such block copolymers with functional group-containing vinyl compounds is generally carried out by adding the vinyl compounds in solution or in a molten state with or without the use of a radical initiator, although there is no restriction to the modifying process.

The functional group-containing vinyl compounds suitable for this purpose include α, β-unsaturated carboxylic acids and alicyclic unsaturated carboxylic acids such as acrylic acid, methacrylic acid, maleic acid, fumaric acid, and cis-4-cyclohexene-1,2-dicarboxylic acid and their derivatives such as anhydrides, esters, amides, imides, and metal salts. Also useful are vinyl group-containing silanes such as vinyltriethoxysilane and γ-methacryloyloxypropyltrimethoxysilane and vinyl group-containing nitrogen compounds such as N-vinylcaprolactam and N-vinylsuccinimide. Of the compounds cited above, maleic anhydride is most suitable.

In this invention, the block copolymers of conjugated dienes and vinyl group-containing aromatic hydrocarbons need to be modified with functional group-containing vinyl compounds for the following reasons: the modification markedly improves the adhesion of the block copolymers to metals and the subsequent reaction of the functional groups with crosslinking agents transforms the block copolymers from thermoplastic to thermosetting and brings about marked improvement in heat and oil resistance and still more improvement in adhesive strength.

Moreover, it is desirable for modified block copolymers A to be hydrogenated. The hydrogenation of the unsaturated linkages originating from the conjugated dienes helps modified block copolymers A to improve their mechanical strength and also enhance their heat resistance to such an extent as to maintain their adhesive strength nearly unchanged even after baking of paints.

The hydrogenation in question can generally be carried out by treating the block copolymers in solution or in a molten state with hydrogen in the presence of Ni, Pd, Co, and the like as catalyst.

The functional group-containing vinyl compounds in vinyl group-containing aromatic hydrocarbon-based polymers B, used together with the aforesaid modified block copolymers A in the base resins, are incorporated into vinyl group-containing aromatic hydrocarbon polymers by addition or copolymerization. The ratio by weight of the vinyl group-containing aromatic hydrocarbons to the functional group-containing vinyl compounds in vinyl group-containing aromatic hydrocarbon-based polymers B is desirably in the range from 99.9/0.1 to 70/30.

The vinyl group-containing aromatic hydrocarbons constituting the aforesaid vinyl group-containing hydrocarbon-based polymers B include those compounds which are cited above in relation to block copolymers A, namely, styrene, o-methylstyrene, p-methylstyrene, 1,3-dimethylstyrene, α-methylstyrene, and vinylnaphthalene, styrene being preferable. Likewise, the functional group-containing vinyl compounds include α, β -unsaturated carboxylic acids and alicyclic unsaturated carboxylic acids such as acrylic acid, methacrylic acid, maleic acid, fumaric acid, and cis-4-cyclohexene-1,2-dicarboxylic acid and their anhydrides, esters, amides, imides, metal salts, and other derivatives. Additional examples are vinyl group-containing silanes such as vinyltriethoxysilane and γ -methacryloyloxypropyltrimethoxysilane and vinyl group-containing nitrogen compounds such as N-vinylcaprolactam and N-vinylsuccinimide. Of the above-mentioned compounds, maleic anhydride is preferable. The functional group-containing vinyl compounds in the aforesaid modified block copolymers A are preferably identical with those in vinyl group-containing aromatic hydrocarbon-based polymers B, although they are not required to be so. It is allowable for vinyl group-containing aromatic hydrocarbon-based polymers B to contain thermoplastic rubbers or unvulcanized rubbers or their low polymers. The incorporation of the functional group-containing vinyl compounds in vinyl group-containing aromatic hydrocarbon-based polymers B is effected for the same reasons as those for the aforesaid block copolymers A.

There is no restriction to the preparatory process for vinyl group-containing aromatic hydrocarbon-based polymers B. In the case of modification with functional group-containing vinyl compounds, the addition of the vinyl compounds in question is effected in solution or in a molten state with or without the use of a radical initiator. In the case of copolymerization, a solution or mass process is generally applied.

The base resins of this invention contain 20% by weight or more of modified block copolymers A and, as needed, 80% by weight or less of vinyl group-containing aromatic hydrocarbon-based polymers B. Where the two are used together, a suitable proportion is 20 to 95% by weight of the former and 80 to 5% of the latter. The simultaneous use of vinyl group-containing aromatic hydrocarbon-based polymers B enhances the modulus of the composition and markedly improves the shear strength.

According to the process of this invention, the aforesaid base resins are mixed with tackifier resins and crosslinking agents at a specified ratio to yield resin compositions for composite vibration dampers.

The tackifier resins here must have a softening point of 160 °C or less. Tackifiers with a softening point in excess of 160°C show improved adhesive strength (T-peel, shear) but suffer a considerable loss in vibration damping near normal temperature, rendering them unsuitable for practical use. The tackifier resins useful for this invention include terpene-derived terpene resins and hydrogenated terpene resins, rosin-based resins such as rosins, rosin esters, and hydrogenated rosin esters, petroleum resins such as aliphatic petroleum resins, aromatic petroleum resins, and polydicyclopentadiene, and low-molecular-weight vinyl group-containing aromatic hydrocarbon-based polymers with a weight average molecular weight of 300 to 10,000. Preferable among them are terpene resins, hydrogenated terpene resins, aliphatic petroleum resins, and low-molecular-weight vinyl group-containing aromatic hydrocarbon-based polymers.

The tackifier resins thus applied function as follows. Modified block copolymers A alone as base resin exhibit low vibration damping in the range from normal to high temperature in spite of their excellent adhesive strength and cannot serve as a component in vibration dampers in said temperature range. Nor do the tackifier resins alone because of their extreme hardness and brittleness. When the two are blended, however, the tackifer resins act as compatibilizer and relax the soft segments originating from the conjugated diene polymer blocks in modified block copolymers A. As a result, the blend exhibits high vibration damping in the range from normal to high temperature and can function as a viscoelastic interlayer with a good balance of vibration damping and adhesive strength in the range from normal to high temperature. Moreover, the addition of vinyl group-containing aromatic hydrocarbon-based polymers B as part of the base resins enhances the modulus of the viscoelastic interlayer and, as a result, improves the adhesive strength, particularly, shear strength.

The amount of tackifier resins is 10 to 150 parts by weight, preferably 20 to 120 parts by weight, per 100 parts of the aforesaid base resins. With less than 10 parts by weight of the tackifier resins, a sufficient effect is not produced for relaxing the soft segments in modified block copolymers A and the vibration-damping performance remains still at a low level. With more than 150 parts by weight, the tackifier resins tend to cause the resin interlayer to flow out at high temperature, particularly at 200 °C or so, on account of their softening point being 160 °C or less.

The crosslinking agents to be used in this invention must undergo crosslinking reaction with the functional groups originating from the functional group-containing vinyl compounds which are the components of both modified block copolymers A and vinyl group-containing aromatic hydrocarbon-based polymers B in the base resins. The crosslinking reaction helps to make the compositions all the more desirable for use in vibration dampers as it furnishes the resulting viscoelastic inter layer with such enhanced heat resistance as to prevent their flow-out near the baking temperature of paints and also with markedly improved oil resistance and adhesive strength (T-peel, shear).

Such crosslinking agents are capable of reacting with those functional groups which are derived from the aforesaid functional group-containing vinyl compounds under specified conditions and their examples are one or a mixture of two or more compounds selected from epoxy compounds, amines, isocyanates, metal alcoholates, guanamine-melamine compounds, aziridyl compounds, and oxazolines. Where the functional groups are carboxylic acids and carboxylic acid anhydrides, diphenylmethane diisocyanate and other isocyanates and bisphenol A-based epoxy resins and other epoxy compounds, all highly reactive with these functional groups, are particularly useful as crosslinking agents.

The amount of crosslinking agents, although varying with the kind, is normally 0.01 to 40 parts by weight, preferably 0.01 to 30 parts by weight, per 100 parts by weight of the base resins composed of modified block copolymers A and vinyl group-containing aromatic hydrocarbon-based polymers B. Less than 0.01 part by weight of a crosslinking agent does not produce a satisfactory effect. With more than 40 parts by weight of a crosslinking agent, the resin compositions become extremely hard and show low vibration damping at normal temperature. The crosslinking agent can be added in any manner and order as long as it is used in the aforesaid range.

It is allowable to add inorganic fillers to the resin compositions of this invention in order to improve their adhesive strength (T-peel, shear). The inorganic fillers to be used for this purpose must resist thermal decomposition when heated up to 250°C or so. Their examples are talc, clay, titania, silica, alumina, mica, zinc oxide, carbon black, and graphite. It is advisable to use one or two or more of talc, clay, silica, and carbon black for their marked effects for improving the shear strength.

It is also allowable to use other resins, within a range not detrimental to the overall performance of vibration dampers, in admixture with the aforesaid modified block copolymers A, vinyl group-containing aromatic hydrocarbon-based polymers B, and tackifier resins in order to improve the vibration-damping performance or the modulus of elasticity. Such other resins include styrenic polymers such as polystyrene, acrylonitrile-styrene copolymers, ABS resins, and SBR (block or random), olefin polymers such as ethylene-α-olefin copolymers, ethylene-vinyl acetate copolymers, ethylene-propylene copolymers, and butene-propylene copolymers, rubbers such as natural rubber, polyisoprene rubber (IR), and butyl rubber (IIR), and elastomers such as polyester elastomers and polyamide elastomers.

Plasticizers may be added to shift the glass transition temperature of a resin composition to a desired value. Plasticizers useful for this purpose include ester-based plasticizers such as polyesters, polyether-polyesters, phosphate esters, epoxy compounds, phthalate diesters, and sebacate diesters, trimellitic acid-based plasticizers, and chlorinated paraffins. They are chosen in accordance with the kind of modified block copolymers A, vinyl group-containing aromatic hydrocarbon-based polymers B, and tackifier resins in use.

Coupling agents such as silanes and titanates may be added to improve the adhesion to metals. Antioxidants based on phenol, phosphorus, or sulfur may also be added to improve the heat resistance.

It is moreover possible to provide the aforesaid viscoelastic resin compositions with electrical conductivity by incorporating solid electric conductors in order to make the resulting vibration dampers spot-weldable. The electric conductors useful for this purpose include stainless steel, zinc, tin, copper, brass, and nickel in the form of powders, flakes, fibers, or wires. They may be used singly or as a mixture of two or more. In oder to obtain good spot weldability, it is desirable to control the ratio of the representative length (L) of the electric conductor to the thickness (T) of the resin interlayer of the composite vibration damper or L/T at 0.5 or more, preferably 0.8 or more, more preferably 1.0 or more, where L refers to the maximum particle diameter of powders, the maximum thickness of flakes, or the maximum diameter of fibers.

The thickness of the viscoelastic interlayer to be formed by the resin compositions of this invention is so chosen as to meet the requirements for vibration damping. It is 10 µm or more, preferably 20 µm or more, from the viewpoint of vibration damping and 300 µm or less, preferably 200 µm or less, from the viewpoint of press fabricability of composite vibration dampers.

There is no restriction to the process for the preparation of composite vibration dampers with the use of the resin compositions of this invention and it is possible to apply, for example, a batch process with the use of cut plates or a continuous process with the use of coils. On the other hand, a number of processes are available to the formation of composites from viscoelastic resins and metals: for example, metals are coated with a solution of viscoelastic resins in a solvent and pasted together; an interlayer of viscoelastic resins is formed on metal by T-die extrusion; a film of viscoelastic resins prepared off-line is inserted between metals and bonded to them like a hot-melt adhesive. A suitable process is chosen in consideration of the properties of the resin compositions and the kind of composite vibration dampers to be obtained from said compositions.

### Detailed Description of the Preferred Embodiment

This invention will be described in detail below with reference to the accompanying examples and comparative examples, though not limited thereto.

### Examples 1 - 5 and Comparative Examples 1 - 4

Table 1 presents a summary of the examples and comparative examples primarily related to the vibration dampers intended for normal-temperature use. The modified block copolymer A here is modified SEBS resin (A) having a styrene to ethylene/butylene ratio by weight of 20/80 and an acid value (mg. CH₃ONa/g.) of 10 obtained from butadiene-styrene block copolymer by hydrogenation and modification with maleic anhydride. The hydrogenated block copolymer (unmodified SEBS) used in Comparative Examples 2 and 3 has the same styrene to ethylene/butylene ratio as the foregoing but is not modified with maleic anhydride. The modified random copolymer (modified random SBR) with an acid value (mg. CH₃ONa/g. ) of 10 used in Comparative Example 4 is obtained by modifying random SBR, prepared by emulsion polymerization and containing 23.5% by weight of styrene, with maleic anhydride.

Hydrogenated terpene resin with a softening point of 115 °C and coumarone resin with a softening point of 120°C were used as tackifier resin.

As crosslinking agents were used bisphenol A-based epoxy resins, one with epoxy equivalents of 184 to 194 and another 3,000 to 5,000 (Epikote 828 and Epikote 1010, available from Yuka Shell Epoxy K.K.). Talc with a particle diameter of 3 to 4 µm was used as filler.

### Examples 6 - 9

Table 2 presents a summary of the examples primarily related to vibration dampers intended for high-temperature use. The modified SEBS resin (B) used here has a styrene to ethylene/butylene ratio by weight of 30/70 and an acid value (mg. CH₃ONa/g.) of 10. Hydrogenated aliphatic petroleum resin with a softening point of 130 °C and coumarone resin with a softening point of 120°C were used as tackifier resin.

The compositions and vibration-damping steel plates for testing were prepared as follows in the examples and comparative examples shown in Tables 1 and 2.

The modified hydrogenated block copolymer (modified SEBS) or hydrogenated block copolymer (SEBS) was kneaded with the tackifier resin in rolls at 100 to 180 °C, then kneaded with the filler where its addition was required, and the resulting composition was dissolved in xylene to yield a coating type composition. This composition was mixed with a given quantity of epoxy resin, applied by a bar coater to a cold-rolled steel sheet, and the coated steel sheet was dried at 180 °C for 3 minutes, stacked with another steel sheet, and pressed together at 150 to 220°C for 3 minutes to furnish a composite vibration damper having a viscoelastic interlayer with a thickness of 50 µm or so.

The vibration dampers thus prepared were tested for their adhesive strength (T-peel and shear) and vibration damping. The results are shown in Tables 1 and 2.

The T-peel strength was determined according to JIS K 6854 at a peel rate of 50 mm./min. while the shear strength was determined according to JIS K 6850 at a peel rate of 5 mm./min. The vibration damping was evaluated on the basis of the loss factor (η) which is a measure of the vibration-absorbing ability by determining the maximum value of η (ηₘₐₓ) and the temperature for ηₘₐₓ (T p) with the application of the mechanical impedance method. The low-temperature vibration damping was evaluated on the basis of the loss factor at 20°C (η_{20 c}).

The compositions were also evaluated for their initial flow-out temperature and oil resistance on the test specimens prepared by applying the aforesaid coating type composition containing the epoxy resin to release paper, drying the composition at 180°C for 3 minutes, and peeling the cured composition from the release paper. The initial flow-out temperature was determined with the aid of a Koka type flow tester (manufactured by Shimadzu Corporation) under the conditions of a die diameter of 0.5 mm., a die length of 1 mm., and a pressure of 10 kgf/cm². The oil resistance was evaluated by observing at room temperature the redissolving behavior of the compositions in xylene, the solvent used earlier in the preparation of coating type compositions.

The results in Table 1 indicate that the compositions in Examples 1 to 5 of this invention intended for vibration dampers for normal-temperature use have a good balance of high adhesive strength (T-peel, shear) and high vibration damping at normal temperature and that, as a result of the reaction of the functional groups in the modified hydrogenated block copolymer with crosslinking agents, the compositions in question do not flow out in the vicinity of 200°C where paints are baked and show a marked improvement in the oil resistance as evidenced by their becoming insoluble in xylene.

On the other hand, the comparative examples have produced unsatisfactory results. The composition in Comparative Example 1 shows too low vibration damping to be viable in commercial use. In Comparative Examples 2 and 3 where the unmodified hydrogenated block copolymer was used, the compositions show low adhesive strength because of the absence of functional groups in the block copolymer and, moreover, they flow out at or below 200 °C and show poor oil resistance as no reaction occurs with crosslinking agents. In Comparative Example 4, the use of unmodified random SBR does not sufficiently develop the adhesive strength even when a crosslinking agent is used.

The results in Table 2 indicate that the compositions intended for vibration dampers for high-temperature use in Examples 6 to 9 of this invention show high adhesive strength (T-peel, shear) and excellent vibration damping at high temperature, particularly in the range from 60 to 100 °C, and that the compositions in question do not flow out in the vicinity of 200°C and show improved oil resistance.

It is thus apparent that the compositions comprising modified block copolymers obtained by modifying block copolymers of conjugated dienes and vinyl group-containing aromatic hydrocarbons with functional group-containing vinyl compounds, tackifier resins, and crosslinking agents are materials of excellent quality for composite vibration dampers as they show a good balance of vibration damping and adhesive strength (T-peel, shear), do not flow out at a temperature as high as 200 °C, and show improved oil resistance.

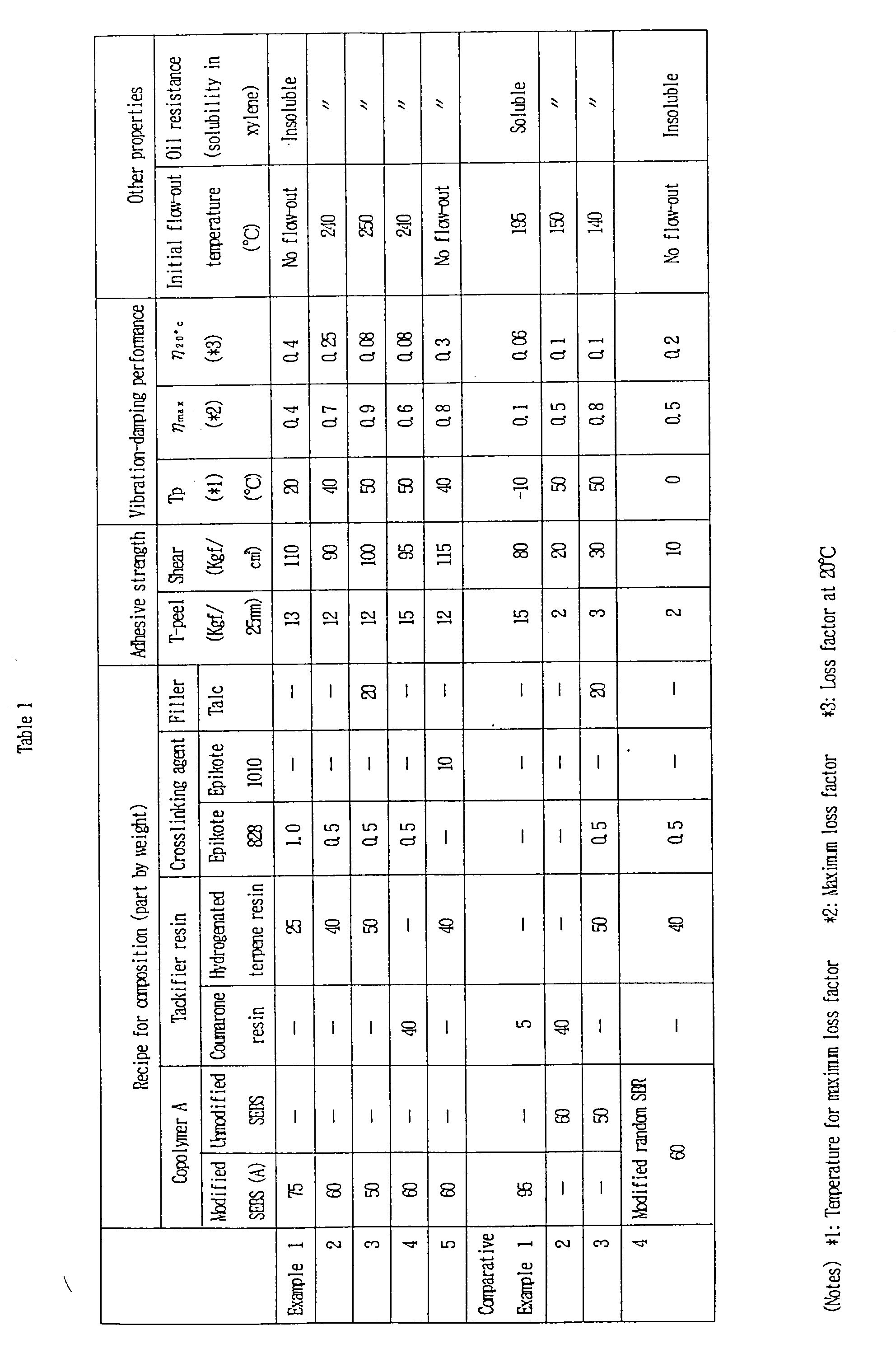

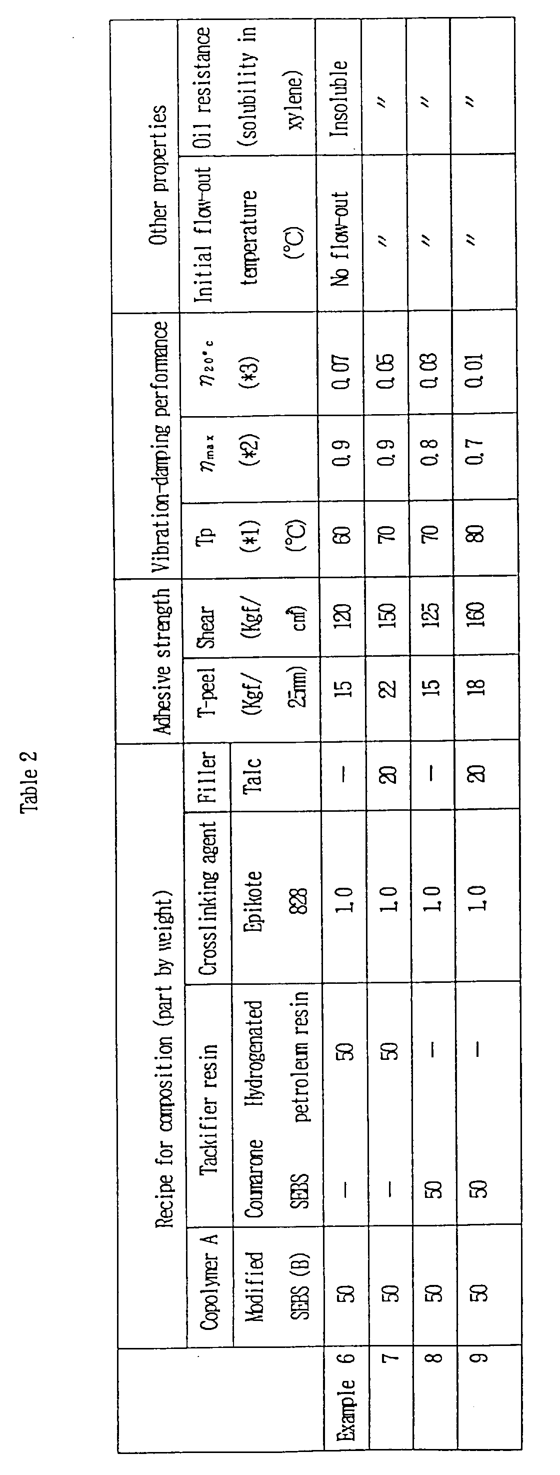

### Examples 10 - 14 and Comparative Examples 5 - 9

The modified block copolymer A used in these examples and comparativeexamples is modified SEBS resins (B) with a styrene to ethylene/butylene ratio by weight of 30/70 and an acid value (mg. CH₃ONa/g.) of 10 obtained by modifying butadiene-styrene block copolymer with maleation and hydrogenation. The unmodified SEBS of Comparative Examples 2 and 3 was used in Comparative Examples 7 and 8 and the modified random SBR of Comparative Example 4 was used in Comparative Example 9.

The vinyl group-containing aromatic hydrocarbon-based polymer B used here is copolymer of styrene and maleic anhydride at a ratio by weight of roughly 91/9.

As tackifier resins were used hydrogenated terpene resin with a softening point of 70°C, coumarone resin with a softening point of 120 °C, and hydrogenated aliphatic petroleum resin with a softening point of 140 °C.

Bisphenol A-based epoxy resin with an epoxy equivalent of 184 to 194 (Epikote 828, available from Yuka Shell Epoxy K.K.) was used as crosslinking agent.

As filler was used talc with a particle diameter of 3 to 4 µm.

The resin compositions and vibration-damping steel sheets for testing were prepared as follows in Examples 10 to 14 and Comparative Examples 5 to 9.

Modified hydrogenated block copolymer (modified SEBS) or hydrogenated block copolymer (SEBS) was kneaded in rolls with the styrene-maleic anhydride copolymer and the tackifier resin at 100 to 180°C with addition of the filler where necessary and the resulting composition was dissolved in xylene to yield a coating type composition. The composition was mixed with a given amount of epoxy resin where necessary and applied to a cold-rolled steel sheet with the aid of a bar coater, and the coated steel sheet was dried at 180 °C for 3 minutes, stacked with another steel sheet, and pressed together at 150 to 220°C for 3 minutes to furnish a composite vibration damper containing a viscoelastic interlayer with a thickness of approximately 50 µm.

The vibration dampers thus prepared were tested for their adhesive strength (T-peel and shear) and vibration damping. The results are shown in Table 3.

The adhesive strength, vibration damping, and initial flow-out temperature were measured and evaluated as in Tables 1 and 2 and the water resistance was evaluated by immersing a composite vibration damper, notched in a specified manner, in boiling water for 6 hours and determining the retention of its shear strength.

It is apparent from Table 3 that the compositions of this invention in Examples 10 to 14 yield viscoelastic interlayers having a good balance of very high adhesive strength (T-peel, shear) and high vibration damping in the range from normal to high temperature and that the functional groups in the modified hydrogenated block copolymers and vinyl group-containing aromatic hydrocarbon-based polymers react with the crosslinking agent to generate thermosetting viscoelastic interlayers which do not flow out on heating and show substantially perfect water resistance.

On the other hand, the compositions of Comparative Examples 5 and 6 yield viscoelastic interlayers of unsatisfactory properties showing somewhat lover vibration damping and adhesive strength in the range from normal to high temperature and starting to flow out at a lower temperature under heat. In Comparative Examples 7 and 8 where the unmodified hydrogenated block copolymer was used, the absence of functional groups in the block copolymer lowers the adhesive strength, causes the viscoelastic interlayer to flow out at 150°C or so, and adversely affects the water resistance. In Comparative Example 9, the modified random SBR is used as base resin as in Comparative Example 4 and this does not sufficiently develop the adhesive strength even in the presence of a crosslinking agent.

The above-mentioned results prove that resin compositions comprising modified block copolymers obtained by modifying block copolymers of conjugated dienes and vinyl group-containing aromatic hydrocarbons with functional group-containing vinyl compounds, vinyl group-containing aromatic hydrocarbon-based polymers composed of vinyl group-containing aromatic hydrocarbons and functional group-containing vinyl compounds, and tackifier resins or compositions additionally containing crosslinking agents show a good balance of vibration damping and adhesive strength (T-peel, shear), do not flow out at high temperature when put in place as a viscoelastic interlayer, possess improved water and oil resistance, and are useful for the fabrication of composite vibration dampers.

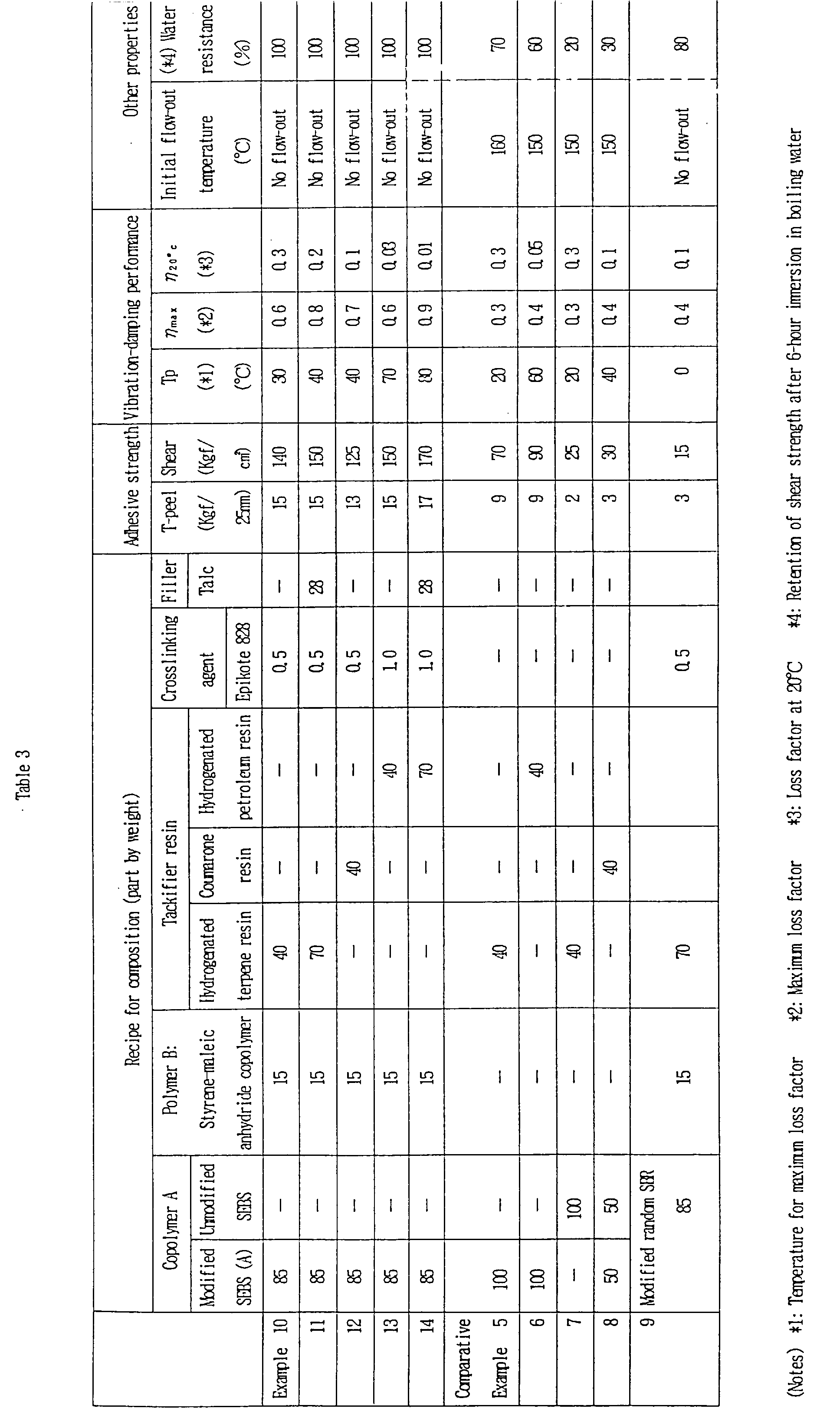

### Example 15

A resin composition was prepared as in the above-mentioned examples with the use of 42 parts by weight of "modified SEBS" with a styrene to ethylene/butylene ratio by weight of 20/80 and an acid value (mg. CH₃ONa/g.) of 10 obtained by maleation and hydrogenation of butadiene-styrene block copolymers as modified block copolymer A, 30 parts by weight of poly(α-methylstyrene) with a weight average molecular weight of 664 (calibrated with polystyrene) and 28 parts by weight of hydrogenated terpene resin with a softening point of 85 °C as tackifier resins, and 0.5 part by weight of bisphenol A-based epoxy resin with an epoxy equivalent of 184 to 194 (Epikote 828 available from Yuka Shell Epoxy K.K.) as crosslinking agent. A vibration damper was prepared from the resin composition and steel sheets and tested for its vibration damping and adhesive strength (T-peel and shear) as in the above-mentioned examples. The loss factor (η), a measure of vibration damping, was 0.050 at 20°C, 0.080 at 40 °C, 0.200 at 60 °C, 0.500 at 80 °C, 0.300 at 100°C, and 0.150 at 120°C. As for the adhesive strength, the T-peel strength was 18 and the shear strength was 85.

### Industrial Applicability

The resin compositions of this invention are extremely useful industrially as they can be inserted with good adhesion between two metal layers to form composite vibration dampers which perform well in vibration damping in the temperature range from normal to as high as 100 °C and exhibit excellent durability (resistance to high-temperature flow-out, water, and oil). The vibration dampers of this invention are also extremely useful industrially as they utilize the aforesaid resin compositions as a viscoelastic interlayer which performs well in vibration damping not only in the range from low to normal temperature but also in the range up to a temperature as high as 100°C, flows out with difficulty even near the baking temperature of paints, and exhibit excellent water and oil resistance.

## Claims

1. Resin compositions for composite vibration dampers which comprise 100 parts by weight of base resins consisting of 20% by weight or more of modified block copolymers A obtained by modifying block copolymers of conjugated dienes and vinyl group-containing aromatic hydrocarbons with functional group-containing vinyl compounds and 80% by weight or less of vinyl group-containing aromatic hydrocarbon-based polymers B composed of vinyl group-containing aromatic hydrocarbons and functional group-containing vinyl compounds, 10 to 150 parts by weight of tackifier resins with a softening point of 160°C or less, and 0.01 to 40 parts by weight of crosslinking agents reactive with said functional groups of the vinyl compounds in the base resins.

2. Resin compositions for composite vibration dampers as described in claim 1 wherein said base resins consist solely of modified block copolymers A.

3. Resin compositions for composite vibration dampers as described in claim 1 wherein said base resins consist of 20 to 95% by weight of modified block copolymers A and 80 to 5% by weight of vinyl group-containing aromatic hydrocarbon-based polymers B.

4. Resin compositions for composite vibration dampers as described in claim 1 wherein modified block copolymers A are hydrogenated.

5. Resin compositions for composite vibration dampers as described in claim 1 wherein said tackifier resins are one or a mixture of two or more resins selected from terpene resins, rosins, and petroleum resins.

6. Resin compositions for composite vibration dampers as described in claim 1 wherein said tackifier resins are terpene resins, hydrogenated terpene resins, or aliphatic petroleum resins.

7. Resin compositions for composite vibration dampers as described in claim 1 wherein said crosslinking agents are one or a mixture of two or more compounds selected from epoxy compounds, amines, isocyanates, metal alcoholates, guanamine-melamine compounds, aziridyl compounds, and oxazolines.

8. Resin compositions for composite vibration dampers as described in claim 1 wherein said functional groups of the vinyl compounds in the base resins are carboxylic acids or carboxylic acid anhydrides and said crosslinking agents are isocyanates or epoxy compounds.

9. Metallic vibration dampers which comprise two metal layers held face to face with a given distance maintained between them and a viscoelastic interlayer inserted between said two metal layers, said viscoelastic interlayer made from resin compositions of 100 parts by weight of base resins consisting of 20% by weight or more of modified block copolymers A obtained by modifying block copolymers of conjugated dienes and vinyl group-containing aromatic hydrocarbons with functional group-containing vinyl compounds and 80% by weight or less of vinyl group-containing aromatic hydrocarbon-based polymers B composed of vinyl group-containing aromatic hydrocarbons and functional group-containing vinyl compounds, 10 to 150 parts by weight of tackifier resins with a softening point of 160°C or less, and 0.01 to 40 parts by weight of crosslinking agents reactive with said functional groups of the vinyl compounds in the base resins.

10. Resin compositions for composite vibration dampers as described in claim 9 wherein said base resins consist solely of modified block copolymers A.

11. Composite vibration dampers as described in claim 9 wherein said base resins consist of 20 to 95% by weight of modified block copolymers A and 80 to 5% by weight of vinyl group-containing aromatic hydrocarbon-based polymers B.

12. Composite vibration dampers as described in claim 9 wherein said modified block copolymers A are hydrogenated.

13. Composite vibration dampers as described in claim 9 wherein said tackifier resins are one or a mixture of two or more resins selected from terpene resins, rosins, and petroleum resins.

14. Composite vibration dampers as described in claim 9 wherein said tackifier resins are terpene resins, hydrogenated terpene resins, or aliphatic petroleum resins.

15. Composite vibration dampers as described in claim 9 wherein said crosslinking agents are one or a mixture of two or more compounds selected from epoxy compounds, amines, isocyanates, metal alcoholates, guanamine-melamine compounds, aziridyl compounds, and oxazolines.

16. Composite vibration dampers as described in claim 9 wherein said functional groups of the vinyl compounds in the base resins are carboxylic acids or carboxlyic acid anhydrides and said crosslinking agents are isocyanates or epoxy compounds.

## Patentansprüche

1. Harzzusammensetzungen für Verbundschwingungsdämpfer, welche 100 Gew.-Teile an Basisharzen, bestehend zu 20 Gew.-% oder mehr aus modifizierten Blockcopolymeren A, welche durch Modifizierung von Blockcopolymeren aus konjugierten Dienen und Vinylgruppen enthaltenden aromatischen Kohlenwasserstoffen mit funktionelle Gruppen enthaltenden Vinylverbindungen erhalten wurden, und zu 80 Gew.-% oder weniger aus eine Vinylgruppe enthaltenden, auf aromatischen Kohlenwasserstoffen basierenden Polymeren B, die aus Vinylgruppen enthaltenden aromatischen Kohlenwasserstoffen und funktionelle Gruppen enthaltenden Vinylverbindungen gebildet sind, 10 bis 150 Gew.-Teile Klebrigmacherharze mit einem Erweichungspunkt von 160°C oder niedriger und 0,01 bis 40 Gew.-Teile Vernetzungsmittel, die mit den funktionellen Gruppen der Vinylverbindungen in dem Ausgangsharz reaktionsfähig sind, enthalten.

2. Harzzusammensetzungen für Verbundschwingungsdämpfer gemäß Anspruch 1, wobei das Basisharz ausschließlich aus modifizierten Blockcopolymeren A besteht.

3. Harzzusammensetzungen für Verbundschwingungsdämpfer gemäß Anspruch 1, wobei die Basisharze zu 20 bis 95 Gew.-% aus modifizierten Blockcopolymeren A und zu 80 bis 5 Gew.-% aus Vinylgruppen enthaltenden, auf aromatischen Kohlenwasserstoffen basierenden Polymeren B bestehen.

4. Harzzusammensetzungen für Verbundschwingungsdämpfer gemäß Anspruch 1, wobei die modifizierten Blockcopolymeren A hydriert sind.

5. Harzzusammensetzungen für Verbundschwingungsdämpfer gemäß Anspruch 1, wobei die Klebrigmacherharze ein oder ein Gemisch aus zwei oder mehr Harzen sind, welche unter Terpenharzen, Kolophonium und Petroleumharzen ausgewählt sind.

6. Harzzusammensetzungen für Verbundschwingungsdämpfer gemäß Anspruch 1, wobei die Klebrigmacherharze Terpenharze, hydrierte Terpenharze oder aliphatische Petroleumharze sind.

7. Harzzusammensetzungen für Verbundschwingungsdämpfer gemäß Anspruch 1, wobei die Vernetzungsmittel eine oder ein Gemisch aus zwei oder mehr Verbindungen sind, welche unter Epoxyverbindungen, Aminen, Isocyanaten, Metallalkoholaten, Guanamin-Melamin-Verbindungen, Aziridylverbindungen und Oxazolinen ausgewählt sind.

8. Harzzusammensetzungen für Verbundschwingungsdämpfer gemäß Anspruch 1, wobei die funktionellen Gruppen der Vinylverbindungen in den Basisharzen Carbonsäure- oder Carbonsäureanhydrid-Gruppen sind und die Vernetzungsmittel Isocyanate oder Epoxyverbindungen sind.

9. Metallische Schwingungsdämpfer, welche zwei Metallschichten, die einander gegenüberliegend in einem vorgegebenen Abstand voneinander gehalten werden, und eine zwischen diese zwei Metallschichten eingefügte viskoelastische Zwischenschicht enthalten, wobei diese viskoelastische Zwischenschicht aus Harzzusammensetzungen aus 100 Gew.-Teilen an Basisharzen, bestehend zu 20 Gew.-% oder mehr aus modifizierten Blockcopolymeren A, welche durch Modifizierung von Blockcopolymeren aus konjugierten Dienen und Vinylgruppen enthaltenden aromatischen Kohlenwasserstoffen mit funktionelle Gruppen enthaltenden Vinylverbindungen erhalten wurden, und zu 80 Gew.-% oder weniger aus Vinylgruppen enthaltenden, auf aromatischen Kohlenwasserstoffen basierenden Polymeren B, die aus Vinylgruppen enthaltenden aromatischen Kohlenwasserstoffen und funktionelle Gruppen enthaltenden Vinylverbindungen gebildet sind, aus 10 bis 150 Gew.-Teilen Klebrigmacherharzen mit einem Erweichungspunkt von 160°C oder niedriger und aus 0,01 bis 40 Gew.-Teilen Vernetzungsmitteln, die mit den funktionellen Gruppen der Vinylverbindungen in den Basisharzen reaktionsfähig sind, bestehen.

10. Harz zusammensetzungen für Verbundschwingungsdämpfer gemäß Anspruch 9, wobei die Basisharze ausschließlich aus modifizierten Blockcopolymeren A bestehen.

11. Verbundschwingungsdämpfer gemäß Anspruch 9, wobei die Basisharze zu 20 bis 95 Gew.-% aus modifizierten Blockcopolymeren A und zu 80 bis 5 Gew.-% aus Vinylgruppen enthaltenden, auf aromatischen Kohlenwasserstoffen basierenden Polymeren B bestehen.

12. Verbundschwingungsdämpfer gemäß Anspruch 9, wobei die modifizierten Blockcopolymeren A hydriert sind.

13. Verbundschwingungsdämpfer gemäß Anspruch 9, wobei die Kebrigmacherharze ein oder eine Mischung aus zwei oder mehr Harzen sind, welche unter Terpenharzen, Kolophonium und Petroleumharzen ausgewählt sind.

14. Verbundschwingungsdämpfer gemäß Anspruch 9, wobei die Klebrigmacherharze Terpenharze, hydrierte Terpenharze oder aliphatische Petroleumharze sind.

15. Verbundschwingungsdämpfer gemäß Anspruch 9, wobei die Vernetzungsmittel eine oder ein Gemisch aus zwei oder mehr Verbindungen sind, welche unter Epoxyverbindungen, Aminen, Isocyanaten, Metallalkoholaten, Guanamin-Melamin-Verbindungen, Aziridylverbindungen und Oxazolinen ausgewählt sind.

16. Verbundschwingungsdämpfer gemäß Anspruch 9, wobei die funktionellen Gruppen der Vinylverbindungen in den Basisharzen Carbonsäure- oder Carbonsäureanhydrid-Gruppen sind und die Vernetzungsmittel Isocyanate oder Epoxyverbindungen sind.

## Revendications

1. Compositions de résines pour amortisseurs composites de vibrations, qui comprennent 100 parties en poids de résines de base, constituées de 20% en poids ou plus de copolymères séquences modifiés A, obtenus en modifiant des copolymères séquences de diènes conjugués et d'hydrocarbures aromatiques à groupe vinylique, par des composés vinyliques à groupes fonctionnels et 80% en poids ou moins de polymères B à base d'hydrocarbures aromatiques à groupe vinylique, composés d'hydrocarbures aromatiques à groupe vinylique et de composés vinyliques à groupes fonctionnels, 10 à 150 parties en poids de résines d'adhérence présentant un point de ramollissement de 160°C ou moins, et 0,01 à 40 parties en poids d'agents de réticulation qui réagissent avec lesdits groupes fonctionnels des composés vinyliques présents dans les résines de base.

2. Compositions de résines pour amortisseurs composites de vibrations selon la revendication 1, dans lesquelles lesdites résines de base sont constituées uniquement de copolymères séquencés modifiés A.

3. Compositions de résines pour amortisseurs composites de vibrations selon la revendication 1, dans lesquelles lesdites résines de base sont constituées de 20 à 95% en poids de copolymères séquencés modifiés A et de 80 à 5% en poids de polymères B à base d'hydrocarbures aromatiques à groupe vinylique.

4. Compositions de résines pour amortisseurs composites de vibrations selon la revendication 1, dans lesquelles des copolymères séquencés modifiés A sont hydrogénés.

5. Compositions de résines pour amortisseurs composites de vibrations selon la revendication 1, dans lesquelles lesdites résines d'adhérence sont une résine ou un mélange d'au moins deux résines choisies parmi des résines de terpène, des colophanes et de résines de pétrole.

6. Compositions de résines pour amortisseurs composites de vibrations selon la revendication 1, dans lesquelles lesdites résines d'adhérence sont des résines de terpène, des résines de terpène hydrogénées ou des résines de pétrole aliphatiques.

7. Compositions de résines pour amortisseurs composites de vibrations selon la revendication 1, dans lesquelles lesdits agents de réticulation sont un composé ou un mélange de deux ou davantage de composés choisis parmi des composés époxy, des amines, des isocyanates, des alcoolates métalliques, des composés de guanamine-mélamine, des composés d'aziridyle et des oxazolines.

8. Compositions de résines pour amortisseurs composites de vibrations selon la revendication 1, dans lesquelles lesdits groupes fonctionnels des composés vinyliques des résines de base sont des acides carboxyliques ou des anhydrides d'acides carboxyliques, et lesdits agents de réticulation sont des isocyanates ou des composés époxy.

9. Amortisseurs métalliques de vibrations, qui comprennent deux couches métalliques maintenues face à face avec entre elles une distance donnée et une couche intermédiaire viscoélastique insérée entre lesdites deux couches métalliques, ladite couche intermédiaire viscoélastique étant réalisée à partir de compositions de résines constituées de 100 parties en poids de résines de base constituées de 20% en poids ou plus de copolymères séquencés modifiés A obtenus en modifiant des copolymères séquencés de diènes conjugués et d'hydrocarbures aromatiques à groupe vinylique par des composés vinyliques à groupes fonctionnels, et de 80% en poids ou moins de polymères B à base d'hydrocarbures aromatiques à groupe vinylique composés d'hydrocarbures aromatiques à groupe vinylique et de composés vinyliques à groupes fonctionnels, de 10 à 150 parties en poids de résines d'adhérence présentant un point de ramollissement de 160°C ou moins, et de 0,01 à 40 parties en poids d'agents de réticulation qui réagissent avec lesdits groupes fonctionnels des composés vinyliques des résines de base.

10. Compositions de résines pour amortisseurs composites de vibrations selon la revendication 9, dans lesquelles lesdites résines de base sont constituées uniquement de copolymères séquencés modifiés A.

11. Amortisseurs composites de vibrations selon la revendication 9, dans lesquels lesdites résines de base sont constituées de 20 à 95% en poids de copolymères séquencés modifiés A et de 80 à 5% en poids de polymères B à base d'hydrocarbures aromatiques à groupe vinylique.

12. Amortisseurs composites de vibrations selon la revendication 9, dans lesquels lesdits copolymères séquencés modifiés A sont hydrogénés.

13. Amortisseurs composites de vibrations selon la revendication 9, dans lesquels lesdites résines d'adhérence sont une résine ou un mélange de deux ou davantage de résines choisies parmi des résines de terpène, des colophanes et des résines de pétrole.

14. Amortisseurs composites de vibrations selon la revendication 9, dans lesquels lesdites résines d'adhérence sont des résines de terpène, des résines de terpènes hydrogénées ou des résines de pétrole aliphatiques.

15. Amortisseurs composites de vibrations selon la revendication 9, dans lesquels lesdits agents de réticulation sont un composé ou un mélange de deux ou davantage de composés choisis parmi des composés époxy, des amines, des isocyanates, des alcoolates métalliques, des composés de guanamine-mélamine, des composés d'aziridyle et des oxazolines.

16. Amortisseurs composites de vibrations selon la revendication 9, dans lesquels lesdits groupes fonctionnels des composés vinyliques des résines de base sont des acides carboxyliques ou des anhydrides d'acides carboxyliques, et lesdits agents de réticulation sont des isocyanates ou des composés époxy.
